# EUROPEAN PATENT APPLICATION

(11) **EP 4 780 134 A1**
(43) Date of publication of application: **22.07.2026**
(21) Application number: 24867538.1
(22) Date of filing: 20.09.2024
(51) Int. Cl.: H04W 76/27

(54) **MESSAGE TRANSMISSION METHOD, AND APPARATUS**

(30) Priority: 22.09.2023 CN 202311247988
(71) Applicant: HUAWEI TECHNOLOGIES CO., LTD., Shenzhen 518129 (CN)
(72) Inventor: YOU, Chunhua, Shenzhen, Guangdong 518129 (CN); WANG, Yan, Shenzhen, Guangdong 518129 (CN); AHLUWALIA, Jagdeep Singh, Shenzhen, Guangdong 518129 (CN)
(74) Representative: Goddar, Heinz J.
(86) International application number: PCT/CN2024/119968
(87) International publication number: WO 2025/061133

(57) **Abstract**

A message transmission method and an apparatus are provided. In the message transmission method, a first network device receives a first request message from a second network device, where the first request message is used to request a context of a terminal device, the first request message includes first indication information, the first indication information indicates that the terminal device has initiated an SDT procedure in an RRC inactive state, and the first network device has stored the context of the terminal device; and if an amount of to-be-transmitted data in SDT of the terminal device is greater than or equal to a data amount threshold, the first network device sends an RRC release message to the second network device, where the RRC release message indicates the terminal device to terminate the SDT procedure and keep in the RRC inactive state. According to the method, when a large amount of data arrives at the terminal device in the SDT procedure, low transmission efficiency of the large amount of data can be avoided.

## Description

This application claims priority to Chinese Patent Application No. 202311247988.7, filed with the China National Intellectual Property Administration on September 22, 2023 and entitled "MESSAGE TRANSMISSION METHOD AND APPARATUS", which is incorporated herein by reference in its entirety.

### TECHNICAL FIELD

This application relates to the field of communication technologies, and in particular, to a message transmission method and an apparatus.

### BACKGROUND

In 5th generation mobile communication technology (5th generation mobile communication technology, 5G) networks, a terminal device may be in a radio resource control (radio resource control, RRC) inactive state, in which the terminal device can reduce energy consumption. If data is to arrive at the terminal device in the RRC inactive state, the terminal device may transmit data through a small data transmission (small data transmission, SDT) procedure. During SDT, the terminal device may receive a large amount of data. How to avoid low transmission efficiency of the large amount of data is a technical problem to be resolved.

### SUMMARY

Embodiments of this application provide a message transmission method and an apparatus, to avoid low transmission efficiency of a large amount of data when the large amount of data arrives at a terminal device in an SDT procedure.

According to a first aspect, this application provides a message transmission method. The method may be applied to a first network device, or may be applied to a chip in the first network device, or may be applied to a logical module or software that can implement all or some functions of the first network device. The following uses the first network device as an example for description. The method includes: The first network device receives a first request message from a second network device, where the first request message is used to request a context of a terminal device, the first request message includes first indication information, the first indication information indicates that the terminal device has initiated an SDT procedure in an RRC inactive state, and the first network device has stored the context of the terminal device; and if an amount of to-be-transmitted data in SDT of the terminal device is greater than or equal to a data amount threshold, sends an RRC release message to the second network device, where the RRC release message indicates the terminal device to terminate the SDT procedure and keep in the RRC inactive state.

It can be learned that when a large amount of data arrives at the terminal device in the SDT procedure, the large amount of data is still transmitted through the SDT procedure, causing low transmission efficiency of the large amount of data. However, in the message transmission method provided in this embodiment of this application, the terminal device can be indicated in a timely manner to terminate the SDT procedure, to avoid the low transmission efficiency of the large amount of data. In addition, the method further helps the terminal device that terminates the SDT procedure and keeps in the RRC inactive state initiate an RRC resume procedure, so that the terminal device transmits the large amount of data in an RRC connected state, to improve transmission efficiency.

In an optional implementation, the RRC release message further includes information indicating the terminal device to immediately initiate the RRC resume procedure, and the RRC resume procedure is used by the terminal device to request to enter the RRC connected state and transmit data in the RRC connected state.

It can be learned that in a case in which the amount of to-be-transmitted data in the SDT of the terminal device is greater than or equal to the data amount threshold, the first network device indicates the terminal device to immediately initiate the RRC resume procedure, so that the terminal device transmits the large amount of data in the RRC connected state, to improve transmission efficiency.

In an optional implementation, the method further includes: The first network device receives second indication information from the second network device, where the second indication information indicates that the amount of to-be-transmitted data in the SDT of the terminal device is greater than or equal to the data amount threshold. Therefore, the first network device determines, based on the received second indication information, that the amount of to-be-transmitted data in the SDT of the terminal device is greater than or equal to the data amount threshold.

Optionally, the second indication information is carried in a control plane message or a user plane message from the second network device.

In an optional implementation, before the first network device receives the second indication information from the second network device, the method further includes: The first network device sends the data amount threshold to the second network device. This helps the second network device determine the data amount threshold, to determine whether the amount of to-be-transmitted data in the SDT of the terminal device is greater than or equal to the data amount threshold.

Optionally, the data amount threshold is carried in a first response message sent to the second network device, and the first response message indicates a partial context of the terminal device.

In an optional implementation, the method further includes: The first network device sends a first response message to the second network device, where the first response message includes address information, the address information corresponds to third indication information, and the third indication information indicates the amount of to-be-transmitted data in the SDT of the terminal device. The first network device receives the third indication information from the second network device based on the address information. The first network device determines, based on the third indication information, that the amount of to-be-transmitted data in the SDT of the terminal device is greater than or equal to the data amount threshold.

It can be learned that the first network device sends the address information to the second network device, so that the first network device can determine content and a type of the third indication information based on the address information, to determine the amount of to-be-transmitted data in the SDT of the terminal device, so as to determine whether the amount of to-be-transmitted data in the SDT of the terminal device is greater than or equal to the data amount threshold.

Optionally, the first response message indicates a partial context of the terminal device.

According to a second aspect, this application provides a message transmission method. The method may be applied to a second network device, or may be applied to a chip in the second network device, or may be applied to a logical module or software that can implement all or some functions of the second network device. The following uses the second network device as an example for description. The method includes: The second network device sends a first request message to a first network device, where the first request message is used to request a context of a terminal device, the first request message includes first indication information, the first indication information indicates that the terminal device has initiated an SDT procedure in an RRC inactive state, and the first network device has stored the context of the terminal device; the second network device sends second indication information to the first network device, where the second indication information indicates that an amount of to-be-transmitted data in SDT of the terminal device is greater than or equal to a data amount threshold; the second network device receives an RRC release message from the first network device, where the RRC release message indicates the terminal device to terminate the SDT procedure and keep in the RRC inactive state; and the second network device sends the RRC release message to the terminal device.

It can be learned that in a case in which the amount of to-be-transmitted data in the SDT of the terminal device is greater than or equal to the data amount threshold, the second network device notifies the first network device of the case. This helps the first network device indicate, in a timely manner, the terminal device to terminate the SDT procedure and keep in the RRC inactive state. When a large amount of data arrives at the terminal device in the SDT procedure, the large amount of data is still transmitted through the SDT procedure, causing low transmission efficiency of the large amount of data. However, in the message transmission method provided in this embodiment of this application, the terminal device can be indicated in a timely manner to terminate the SDT procedure, to avoid the low transmission efficiency of the large amount of data. In addition, the method further helps the terminal device that terminates the SDT procedure and keeps in the RRC inactive state initiate an RRC resume procedure, so that the terminal device transmits the large amount of data in an RRC connected state, to improve transmission efficiency.

In an optional implementation, the RRC release message further includes information indicating the terminal device to immediately initiate the RRC resume procedure, and the RRC resume procedure is used by the terminal device to request to enter the RRC connected state and transmit data in the RRC connected state.

It can be learned that in a case in which the amount of to-be-transmitted data in the SDT of the terminal device is greater than or equal to the data amount threshold, the terminal device is indicated to immediately initiate the RRC resume procedure, so that the terminal device transmits the large amount of data in the RRC connected state, to improve the transmission efficiency.

In an optional implementation, that the second network device sends the second indication information to the first network device includes: The second network device determines the data amount threshold; or the second network device receives the data amount threshold from the first network device. If the amount of to-be-transmitted data in the SDT of the terminal device is greater than or equal to the data amount threshold, the second network device sends the second indication information to the first network device.

In an optional implementation, the method further includes: The second network device receives third indication information from the terminal device, where the third indication information indicates the amount of to-be-transmitted data in the SDT of the terminal device. This helps the second network device determine the amount of to-be-transmitted data in the SDT of the terminal device based on the third indication information, to determine whether the amount of to-be-transmitted data in the SDT of the terminal device is greater than or equal to the data amount threshold.

In an optional implementation, the data amount threshold received by the second network device is carried in a first response message from the first network device, and the first response message indicates a partial context of the terminal device.

In an optional implementation, the second indication information is carried in a control plane message or a user plane message that is sent to the first network device.

According to a third aspect, this application provides a message transmission method. The method may be applied to a second network device, or may be applied to a chip in the second network device, or may be applied to a logical module or software that can implement all or some functions of the second network device. The following uses the second network device as an example for description. The method includes: The second network device sends a first request message to a first network device, where the first request message is used to request a context of a terminal device, the first request message includes first indication information, the first indication information indicates that the terminal device has initiated an SDT procedure in an RRC inactive state, and the first network device has stored the context of the terminal device; the second network device receives a first response message from the first network device, where the first response message includes address information, the address information corresponds to third indication information, and the third indication information indicates an amount of to-be-transmitted data in SDT of the terminal device; the second network device sends the third indication information to the first network device based on the address information; the second network device receives an RRC release message from the first network device, where the RRC release message indicates the terminal device to terminate the SDT procedure and keep in the RRC inactive state; and the second network device sends the RRC release message to the terminal device.

It can be learned that the second network device sends the third indication information to the first network device based on the address information. This helps the first network device determine content and a type of the third indication information based on the address information, to determine the amount of to-be-transmitted data in the SDT of the terminal device, so as to determine whether the amount of to-be-transmitted data in the SDT of the terminal device is greater than or equal to a data amount threshold. In this way, in a case in which the amount of to-be-transmitted data in the SDT of the terminal device is greater than or equal to the data amount threshold, the first network device indicates, in a timely manner, the terminal device to terminate the SDT procedure and keep in the RRC inactive state. When a large amount of data arrives at the terminal device in the SDT procedure, the large amount of data is still transmitted through the SDT procedure, causing low transmission efficiency of the large amount of data. However, in the message transmission method provided in this embodiment of this application, the terminal device can be indicated in a timely manner to terminate the SDT procedure, to avoid the low transmission efficiency of the large amount of data. In addition, the method further helps the terminal device that terminates the SDT procedure and keeps in the RRC inactive state initiate an RRC resume procedure, so that the terminal device transmits the large amount of data in an RRC connected state, to improve transmission efficiency.

In an optional implementation, the RRC release message further includes information indicating the terminal device to immediately initiate the RRC resume procedure, and the RRC resume procedure is used by the terminal device to request to enter the RRC connected state and transmit data in the RRC connected state.

It can be learned that in a case in which the amount of to-be-transmitted data in the SDT of the terminal device is greater than or equal to the data amount threshold, the terminal device is indicated to immediately initiate the RRC resume procedure. This helps the terminal device transmit the large amount of data in the RRC connected state, to improve the transmission efficiency.

In an optional implementation, the first response message indicates a partial context of the terminal device.

According to a fourth aspect, this application further provides a communication apparatus. The communication apparatus may be a first network device or a second network device, or may be a chip in the first network device or the second network device, or may be a logical module or software that can implement all or some functions of the first network device or the second network device. The communication apparatus has a function of implementing some or all of the implementations according to any one of the first aspect to the third aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus. In addition, the processing unit may be configured to control the communication unit to send and receive data/signaling.

In an implementation, the communication unit is configured to receive a first request message from the second network device, where the first request message is used to request a context of a terminal device, the first request message includes first indication information, the first indication information indicates that the terminal device has initiated an SDT procedure in an RRC inactive state, and the communication apparatus has stored the context of the terminal device.

The communication unit is further configured to: if an amount of to-be-transmitted data in SDT of the terminal device is greater than or equal to a data amount threshold, send an RRC release message to the second network device, where the RRC release message indicates the terminal device to terminate the SDT procedure and keep in the RRC inactive state.

In addition, for another optional implementation of the communication apparatus in this aspect, refer to related content in the first aspect. Details are not described herein again.

In another implementation, the communication unit is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device.

The communication unit is further configured to send second indication information to the first network device, where the second indication information indicates that an amount of to-be-transmitted data in SDT of the terminal device is greater than or equal to a data amount threshold.

The communication unit is further configured to receive an RRC release message from the first network device, where the RRC release message indicates the terminal device to terminate the SDT procedure and keep in the RRC inactive state.

The communication unit is further configured to send the RRC release message to the terminal device.

In addition, for another optional implementation of the communication apparatus in this aspect, refer to related content in the second aspect. Details are not described herein again.

In another implementation, the communication unit is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device.

The communication unit is further configured to receive a first response message from the first network device, where the first response message includes address information, the address information corresponds to third indication information, and the third indication information indicates an amount of to-be-transmitted data in SDT of the terminal device.

The communication unit is further configured to send the third indication information to the first network device based on the address information.

The communication unit is further configured to receive an RRC release message from the first network device, where the RRC release message indicates the terminal device to terminate the SDT procedure and keep in the RRC inactive state.

The communication unit is further configured to send the RRC release message to the terminal device.

In addition, for another optional implementation of the communication apparatus in this aspect, refer to related content in the third aspect. Details are not described herein again.

For example, the communication unit may be a transceiver or a communication interface, the storage unit may be a memory, and the processing unit may be a processor. The processor is coupled to the memory. The memory is configured to store a program or instructions. The processor may be configured to cause, when the program or instructions are executed by the processor, the communication apparatus to perform the method according to any one of the first aspect to the third aspect. The transceiver or the communication interface may be configured to send and receive signals and/or data.

In an implementation, the transceiver is configured to receive a first request message from the second network device, where the first request message is used to request a context of a terminal device, the first request message includes first indication information, the first indication information indicates that the terminal device has initiated an SDT procedure in an RRC inactive state, and the communication apparatus has stored the context of the terminal device.

The transceiver is further configured to: if an amount of to-be-transmitted data in SDT of the terminal device is greater than or equal to a data amount threshold, send an RRC release message to the second network device, where the RRC release message indicates the terminal device to terminate the SDT procedure and keep in the RRC inactive state.

In addition, for another optional implementation of the communication apparatus in this aspect, refer to related content in the first aspect. Details are not described herein again.

In another implementation, the transceiver is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device.

The transceiver is further configured to send second indication information to the first network device, where the second indication information indicates that an amount of to-be-transmitted data in SDT of the terminal device is greater than or equal to a data amount threshold.

The transceiver is further configured to receive an RRC release message from the first network device, where the RRC release message indicates the terminal device to terminate the SDT procedure and keep in the RRC inactive state.

The transceiver is further configured to send the RRC release message to the terminal device.

In addition, for another optional implementation of the communication apparatus in this aspect, refer to related content in the second aspect. Details are not described herein again.

In another implementation, the transceiver is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device.

The transceiver is further configured to receive a first response message from the first network device, where the first response message includes address information, the address information corresponds to third indication information, and the third indication information indicates an amount of to-be-transmitted data in SDT of the terminal device.

The transceiver is further configured to send the third indication information to the first network device based on the address information.

The transceiver is further configured to receive an RRC release message from the first network device, where the RRC release message indicates the terminal device to terminate the SDT procedure and keep in the RRC inactive state.

The transceiver is further configured to send the RRC release message to the terminal device.

In addition, for another optional implementation of the communication apparatus in this aspect, refer to related content in the third aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of integrated circuit technologies, an increasing quantity of components may be integrated on a same chip. For example, the digital baseband processor and a plurality of application processors (for example, but not limited to, a graphics processing unit and a multimedia processor) may be integrated on a same chip. The chip may be referred to as a system on a chip (System on a Chip, SoC). Whether the components are separately disposed on different chips or integrated on one or more chips usually depends on a requirement of a product design. Implementation forms of the foregoing components are not limited in embodiments of this application.

According to a fifth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and then a processed signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and then a processed signal is input to the processor.

Unless otherwise specified, operations such as sending and receiving related to the processor may be more generally understood as operations such as output, receiving, and input of the processor, not sending and receiving operations directly performed by a radio frequency circuit and an antenna, if the operations do not conflict with actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a sixth aspect, this application further provides a communication system. The system includes at least one first network device and at least one second network device in the foregoing aspects. In another possible design, the system may further include another device that interacts with the first network device and/or the second network device in the solutions provided in this application.

According to a seventh aspect, this application provides a computer-readable storage medium. The computer-readable storage medium stores a computer program. When the computer program is run, the method according to any one of the first aspect to the third aspect is performed.

According to an eighth aspect, this application further provides a computer program product including instructions. The computer program product includes computer program code. When the computer program code is run, the method according to any one of the first aspect to the third aspect is performed.

According to a ninth aspect, this application provides a chip system. The chip system includes a processor and an interface, the interface is configured to obtain a program or instructions, and the processor is configured to invoke the program or the instructions to implement the function in any one of the first aspect to the third aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a structure of a communication system;
FIG. 2 is a diagram of a 5G system architecture;
FIG. 3 is a diagram of another 5G system architecture;
FIG. 4 is a diagram of a gNB;
FIG. 5 is a diagram of a 5G protocol stack;
FIG. 6 is a schematic flowchart of a message transmission method according to an embodiment of this application;
FIG. 7A and FIG. 7B are a diagram of another message transmission method according to an embodiment of this application;
FIG. 8A and FIG. 8B are a diagram of another message transmission method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes embodiments of this application with reference to the accompanying drawings in embodiments of this application.

To better understand a message transmission method disclosed in embodiments of this application, a communication system to which embodiments of this application are applicable is first described.

The technical solutions in embodiments of this application may be applied to various communication systems, for example, a global system for mobile communications, a long term evolution (long term evolution, LTE) system, a universal mobile telecommunications system, a 4th generation (4th generation, 4G) mobile communication technology system, a 4.5th generation (4.5th generation, 4.5G) mobile communication technology system, and a 5th generation mobile communication technology (5th generation mobile network, 5G) system. With continuous development of communication technologies, the technical solutions in embodiments of this application may be further used in a subsequent evolved communication system, for example, a 6th generation mobile communication technology (6th generation mobile network, 6G) system, and a 7th generation mobile communication technology (7th generation mobile network, 7G) system. The 5G system aims to improve a data transmission speed, reduce a latency, support more users, devices, and services, and improve network efficiency. Three application scenarios supported by the 5G system are enhanced mobile broadband (enhanced mobile broadband, eMBB), ultra-reliable low latency communication (ultra-reliable low latency communication, URLLC), massive machine type of communication (massive machine type of communication, mMTC), and the like.

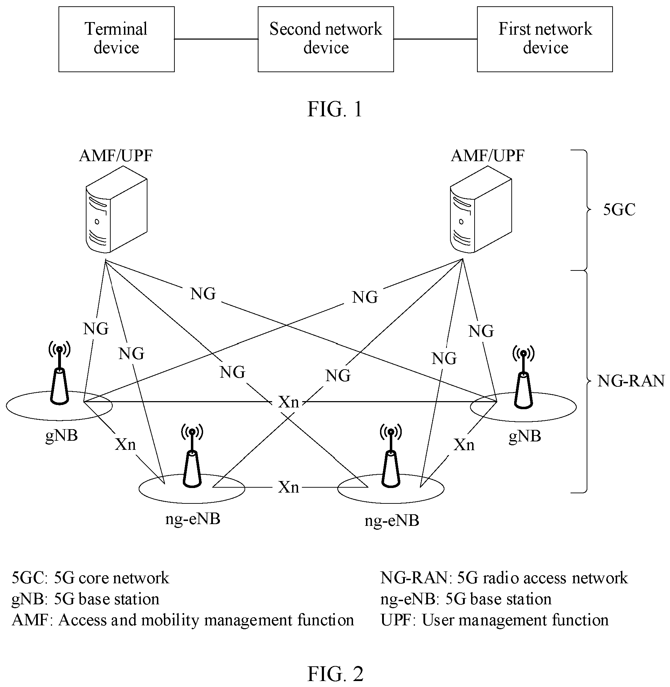

FIG. 1 is a diagram of a structure of a communication system according to an embodiment of this application. The communication system includes a terminal device, a second network device, and a first network device. The terminal device may communicate with the second network device, and the second network device may communicate with the first network device. For example, a network device is a next generation NodeB (next generation NodeB, gNB), the second network device is a receiving base station (receiving gNB) corresponding to the terminal device, and the first network device is a last serving base station (Last serving gNB) corresponding to the terminal device. In addition, a device quantity and form shown in FIG. 1 are used as an example, and do not constitute a limitation on this embodiment of this application.

The following describes a 5G system architecture by using an example. As shown in FIG. 2, the 5G system architecture includes a 5G core (5th generation core, 5GC) network and a 5G radio access network (next-generation radio access network, NG-RAN), and the NG-RAN and the 5GC may perform network communication. A radio access network (radio access network, RAN) node in the NG-RAN includes a gNB and an ng-eNB. The gNB provides a termination point for user plane and control plane protocols of a new radio (new radio, NR) technology, and the ng-eNB provides a termination point for user plane protocol and control plane protocol stacks of an evolved universal mobile telecommunications system (universal mobile telecommunications system, UMTS) terrestrial radio access network (terrestrial radio access network) (E-UTRAN for short). In addition, gNBs are connected, the gNB is connected to the ng-eNB, and ng-eNBs are connected through Xn interfaces. The gNB is connected to the 5GC and the ng-eNB is connected to the 5GC through NG interfaces. Specifically, the gNB is connected to an access and mobility management function (access and mobility management function, AMF) module and the ng-eNB is connected to the AMF module through NG-C interfaces; and the gNB is connected to a user plane management function (user plane function, UPF) module and the ng-eNB is connected to the UPF module through NG-U interfaces.

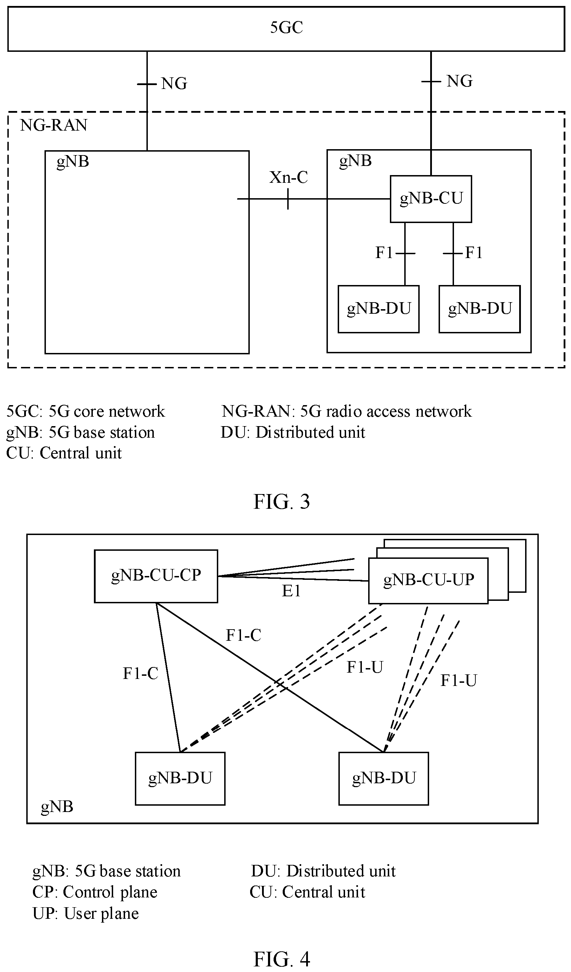

In a possible deployment, as shown in FIG. 3, one gNB includes a gNB-central unit (central unit, CU) and a plurality of gNB-distributed units (distributed unit, DU). The gNB-CU is connected to the gNB-DU through an F1 interface, and the gNB-CU is connected to another gNB through an Xn-C interface. In a possible deployment, as shown in FIG. 4, one gNB-CU includes one gNB-CU-control plane (control plane, CP) and a plurality of gNB-CU-user planes (user plane, UP). The gNB-CU-CP is connected to each gNB-CU-UP through an E1 interface, the gNB-CU-CP is connected to the gNB-DU through an F1-C interface, and each gNB-CU-UP is connected to the gNB-DU through an F1-U interface.

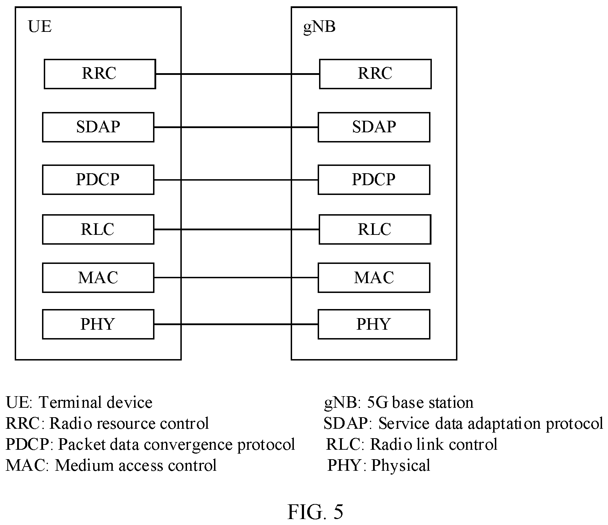

As shown in FIG. 5, in the 5G system, a protocol stack includes the following protocol layers: an RRC layer, a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer. The following briefly describes functions of each protocol layer.

Functions of the RRC layer include but are not limited to: controlling the PDCP layer, the RLC layer, the MAC layer, and the PHY layer, obtaining a system message, paging, mobility management, and the like.

The SDAP layer directly carries an internet protocol (internet protocol, IP) data packet of the user plane. Functions of the SDAP layer include but are not limited to: processing mapping between a quality of service (quality of service, QoS) flow and a data radio bearer (data radio bearer, DRB), and adding a quality of service flow identifier (QoS flow indicator, QFI) of data to a data packet.

Functions of the PDCP layer include but are not limited to: user IP header compression function, encryption/decryption (for control plane/user plane data), data integrity protection/check, data packet sorting function, data packet replication function, traffic distribution function, and the like.

Functions of the RLC layer include but are not limited to: transparent mode (transparent mode, TM) (for message broadcasting), unacknowledged mode (unacknowledged mode, UM) (for a voice service with a latency requirement), and acknowledged mode (acknowledged mode, AM) (for a common service with high accuracy). Functions of the RLC layer further include: segmentation, reassembly, and error correction.

Functions of the MAC layer include but are not limited to: resource scheduling, mapping between a logical channel and a transport channel, multiplexing/demultiplexing, and uplink and downlink asynchronous hybrid automatic repeat request (hybrid automatic repeat request, HARQ).

Functions of the PHY layer include but are not limited to: error detection, forward error correction code (forward error correction, FEC), rate matching, physical channel mapping, adjustment and demodulation, frequency synchronization and time synchronization, radio measurement, and multiple-in multiple-out (multiple-in multiple-out, MIMO) processing.

In embodiments of this application, the network device is any device having a wireless transceiver function or a chip that can be disposed in the device. The network device includes but is not limited to: an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB, or a home NodeB, HNB), a baseband unit (baseband unit, BBU), and an access node (access point, AP) in a wireless fidelity (wireless fidelity, Wi-Fi) system, a wireless relay node, a wireless backhaul node, a transmission point (transmission and reception point, TRP, or transmission point, TP), or the like. Alternatively, the network device may be a device used in a 4G, 5G, or even 6G system, for example, an evolved NodeB (NodeB, eNB, or e-NodeB, evolved NodeB) in LTE, a next-generation LTE base station (next-generation eNodeB, ng-eNB), a next-generation NodeB (next-generation NodeB, gNodeB, or gNB) in NR, a transmission reception point or a transmission point (TRP, or TP), a base station that is subsequently evolved from a 3rd generation partnership project (3rd Generation Partnership Project, 3GPP), or may be a network node that forms the gNB or the transmission point, for example, a baseband unit (BBU), a pico network device (Picocell), a femto network device (Femtocell), or a roadside unit (road side unit, RSU) in an intelligent driving scenario. The base station may be a macro base station, a micro base station, a pico base station, a small cell, a relay station, a balloon station, or the like. In addition, the network device may alternatively be a server, a wearable device, a vehicle-mounted device, or the like.

The terminal device may also be referred to as user equipment (user equipment, UE), a terminal (terminal), an access terminal, a subscriber unit (subscriber unit), a subscriber station, a mobile station (mobile station, MS), a remote station, a remote terminal, a mobile device, a user terminal, a user agent, or a user apparatus, and may be used in the 4G, 5G, or even 6G system. The terminal device in embodiments of this application may be a handheld device, a vehicle-mounted device, a wearable device, or a computing device that has a wireless communication function, or another processing device connected to a wireless modem. The terminal device may be a terminal that has a function of being connected to a cellular base station. Alternatively, the terminal device may be a terminal in a Wi-Fi system (namely, a Wi-Fi terminal), and the Wi-Fi terminal has a function of being connected to a Wi-Fi AP. For example, the terminal device may be a mobile phone (mobile phone), a cellular phone (cellular phone), a smartphone (smartphone), a tablet computer (Pad), a computer with a wireless transceiver function, a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. The terminal device may alternatively be a virtual reality (virtual reality, VR) terminal device, an augmented reality (augmented reality, AR) terminal device, a wireless terminal in industrial control (industrial control), a tactile terminal device, a vehicle-mounted terminal device, a wireless terminal in self-driving (self-driving), a wireless terminal in telemedicine (remote medical), a wireless terminal in smart grid (smart grid), a wireless terminal in transportation security (transportation safety), a wireless terminal in smart city (smart city), a wireless terminal in smart home (smart home), a wearable terminal device, or the like.

A core network (central network, CN) has functions of completing registration, connection, and session management. A core network element includes: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR) network element, a network repository function (network repository function, NRF) network element, an application function (application function, AF) network element, an AMF network element, a session management function module (session management function, SMF) network element, a UPF network element, and the like.

The AUSF network element is mainly responsible for performing authentication on a user, to determine whether to allow the user or a device to access a network. The NEF network element is configured to expose a service and a capability of a 3GPP network function to the AF network element, and also enables the AF network element to provide information for the 3GPP network function. The PCF network element may be configured to perform policy management on a charging policy and a QoS policy. The UDM network element is mainly responsible for functions such as subscription data management and user access authorization. The UDR network element is mainly responsible for an access function for subscription data, policy data, application data, and the like. The NRF network element may be configured to provide a network element discovery function, and provide, based on a request from another network element, network element information corresponding to a network element type. The NRF network element further provides network element management services such as registration, update, and deregistration of a network element, and subscription and push of a network element status. The AF network element mainly transfers a requirement of an application side on a network side. The AMF network element mainly performs functions such as mobility management and access authentication/authorization, and the AMF network element is further responsible for transferring a user policy between the terminal device and the PCF network element. The SMF network element may be configured to complete session management functions such as IP address assignation, UPF selection, and charging and QoS policy control for the terminal device. The UPF network element, serving as an interface UPF with a data network, completes functions such as user plane data forwarding, session/flow level-based charging statistics, and bandwidth limiting.

The following describes embodiments of this application in detail with reference to the accompanying drawings. In a schematic flowchart of this application, an example in which a terminal device, a second network device, and a first network device are used as execution bodies of the interaction illustration is used to illustrate a corresponding method. However, the execution body of the interaction illustration is not limited in this application. For example, any device in the figure may be a chip, a chip system, or a processor that supports the device in implementing a corresponding method, or may be a logical module or software that can implement all or some functions of the device.

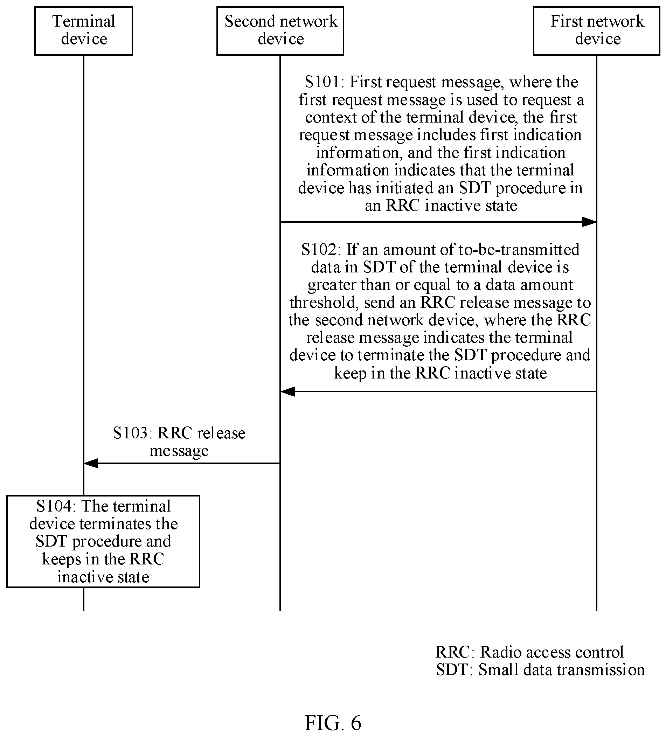

FIG. 6 is a schematic flowchart of a message transmission method according to an embodiment of this application. The message transmission method may include the following steps.

S101: A second network device sends a first request message to a first network device, where the first request message is used to request a context of the terminal device, the first request message includes first indication information, and the first indication information indicates that the terminal device has initiated an SDT procedure in an RRC inactive state. Correspondingly, the first network device receives the first request message from the second network device.

The first network device has stored the context of the terminal device. For example, the context of the terminal device includes a PDCP configuration and an RLC configuration of the terminal device.

It may be understood that when data arrives, the terminal device in the RRC inactive state initiates the SDT procedure in the RRC inactive state to the second network device. Then, the second network device sends the first request message to the first network device, to request to obtain the context of the terminal device. This facilitates data transmission in SDT. In addition, in this embodiment of this application, the first request message is, for example, a retrieve context request (namely, Retrieve UE Context request) message.

For example, in a 5G network, that the terminal device is in the RRC inactive state mainly has the following features.
1. The terminal device keeps in a connection management (connection management, CM)-connected (namely, CM-CONNECTED) state.
2. An RRC connection is suspended.
3. The terminal device may move within an area configured by an NG-RAN, and does not need to notify the NG-RAN.
4. When the terminal device moves outside a configured RAN-based notification area (RAN-based notification area, RNA), the terminal device notifies the NG-RAN through an RNA update.
5. The NG-RAN may page the terminal device by using an inactive radio network temporary identifier (inactive radio network temporary identifier, I-RNTI) configured by the NG-RAN.

In an optional implementation, that the terminal device initiates the SDT procedure in the RRC inactive state includes: The terminal device sends an RRC resume request (namely, RRC Resume Request) message for the SDT, uplink SDT data (namely, UL SDT data), and/or uplink SDT signaling to the second network device. The RRC resume request message for the SDT includes an I-RNTI, and the I-RNTI is used to identify the context of the terminal device. The second network device determines the first network device based on the I-RNTI, and then the second network device performs step S101.

In an optional implementation, after the first network device receives the first request message from the second network device, the method further includes: The first network device sends a first response message to the second network device, where the first response message indicates a partial context of the terminal device; and correspondingly, the second network device receives the first response message from the first network device. For example, the partial context of the terminal device includes the RLC configuration of the terminal device. In addition, in this embodiment of this application, the first response message is, for example, a partial context transfer (namely, partial UE context transfer) message.

Optionally, after the first network device determines that an SDT procedure without anchor relocation (that is, SDT without anchor relocation) is to be performed, the first network device sends the first response message to the second network device. It may be understood that the message transmission method provided in this embodiment of this application may be applied to the SDT procedure without anchor relocation.

Optionally, after the second network device receives the first response message from the first network device, the method further includes: The second network device sends an acknowledgement message to the first network device, where the acknowledgement message indicates that the second network device acknowledges reception of the partial context of the terminal device; and correspondingly, the first network device receives the acknowledgement message from the second network device. For example, the acknowledgement message is a partial context transfer acknowledgement (namely, Partial UE Context transfer acknowledgement) message.

S102: If an amount of to-be-transmitted data in the SDT of the terminal device is greater than or equal to a data amount threshold, the first network device sends an RRC release message to the second network device, where the RRC release message indicates the terminal device to terminate the SDT procedure and keep in the RRC inactive state. Correspondingly, the second network device receives the RRC release message from the first network device.

In this embodiment of this application, "if..." may also be understood as "in a case in which...". For example, step S102 may also be understood as: In a case in which the amount of to-be-transmitted data in the SDT of the terminal device is greater than or equal to the data amount threshold, the first network device sends the RRC release message to the second network device.

Optionally, the amount of to-be-transmitted data in the SDT of the terminal device may be a size of to-be-transmitted uplink data in the SDT of the terminal device, for example, a to-be-transmitted UL SDT data size of the terminal device or an amount of data in a buffer of the terminal device (for example, an amount of data indicated by a buffer status report (buffer status report, BSR)).

The following describes optional manners in which the first network device determines whether the amount of to-be-transmitted data in the SDT of the terminal device is greater than or equal to the data amount threshold, as described in the following optional Implementation 1.1 and Implementation 1.2.

Implementation 1.1: The first network device determines, based on second indication information, that the amount of to-be-transmitted data in the SDT of the terminal device is greater than or equal to the data amount threshold. The second indication information is sent by the second network device to the first network device, and the second indication information indicates that the amount of to-be-transmitted data in the SDT of the terminal device is greater than or equal to the data amount threshold. In addition, the second indication information may also be referred to as, for example, an SDT data size threshold crossed message.

Optionally, the method further includes: The second network device determines the data amount threshold; or the second network device receives the data amount threshold from the first network device. The second network device compares the amount of to-be-transmitted data in the SDT of the terminal device with the data amount threshold, to determine whether the amount of to-be-transmitted data in the SDT of the terminal device is greater than or equal to the data amount threshold. In a case in which the amount of to-be-transmitted data in the SDT of the terminal device is greater than or equal to the data amount threshold, the second network device sends the second indication information to the first network device.

Optionally, before the second network device determines whether the amount of to-be-transmitted data in the SDT of the terminal device is greater than or equal to the data amount threshold, the method further includes: The terminal device sends third indication information to the second network device, where the third indication information indicates the amount of to-be-transmitted data in the SDT of the terminal device; and correspondingly, the second network device receives the third indication information from the terminal device. The second network device determines the amount of to-be-transmitted data in the SDT of the terminal device based on the third indication information. For example, the third indication information is a BSR, the BSR indicates data corresponding to one or more logical channel groups, and the second network device sums up the data of the plurality of logical channel groups, to determine the amount of to-be-transmitted data in the SDT of the terminal device.

Optionally, when the data amount threshold is sent by the first network device to the second network device, the data amount threshold is carried in the first response message, and the first response message indicates the partial context of the terminal device. For detailed descriptions of the first response message, refer to the foregoing related descriptions. Details are not described again.

In an optional manner, the second indication information is carried in a control plane message sent by the second network device to the first network device. For example, the control plane message is a retrieve context confirm (namely, Retrieve UE Context Confirm) message, and the retrieve context confirm message is used to request to terminate the SDT procedure.

In another optional manner, the second indication information is carried in a user plane message sent by the second network device to the first network device. For example, the user plane message is assistance information data (Assistance Information Data) of a protocol data unit (protocol data unit, PDU) type 2 (namely, PDU type 2). In addition, when the first network device is of an architecture in which a CU-CP and a CU-UP are separated, the second network device sends the user plane message to the CU-UP in the first network device. The user plane message carries the second indication information, and then the CU-UP in the first network device sends the user plane message to the CU-CP.

Implementation 1.2: The first network device determines, based on third indication information, whether the amount of to-be-transmitted data in the SDT of the terminal device is greater than or equal to the data amount threshold. The third indication information is sent by the second network device to the first network device, and the third indication information indicates the amount of to-be-transmitted data in the SDT of the terminal device.

Specifically, the first network device determines the amount of to-be-transmitted data in the SDT of the terminal device based on the third indication information. The first network device compares the amount of to-be-transmitted data in the SDT of the terminal device with the data amount threshold, to determine whether the amount of to-be-transmitted data in the SDT of the terminal device is greater than or equal to the data amount threshold.

Optionally, the method further includes: The first network device sends the first response message to the second network device, where the first response message includes address information, and the address information corresponds to the third indication information; and correspondingly, the second network device receives the first response message from the first network device. The second network device receives the third indication information from the terminal device, and sends the third indication information to the first network device based on the address information. Correspondingly, the first network device receives the third indication information from the second network device based on the address information. It may be understood that the address information is used to transmit the third indication information, and is not used to transmit user data or non-access stratum (non-access stratum, NAS) signaling. In addition, for detailed descriptions of the third indication information, refer to related descriptions in Implementation 1.1. Details are not described again.

In addition, when the first network device is of an architecture in which a CU-CP and a CU-UP are separated, the second network device sends the third indication information to the CU-UP of the first network device based on the address information, and then the CU-UP of the first network device sends the third indication information to the CU-CP.

Optionally, that the second network device sends the third indication information to the first network device based on the address information includes: The second network device sends the address information and the third indication information to the first network device. Correspondingly, that the first network device receives the third indication information from the first network device based on the address information includes: The first network device receives the address information and the third indication information from the second network device. Because the address information corresponds to the third indication information, the first network device determines content, a type, and the like of the third indication information based on the received address information, so that the first network device can determine the amount of to-be-transmitted data in the SDT of the terminal device.

Optionally, the address information is a tunnel endpoint identifier (tunnel endpoint identifier, TEID).

Optionally, the data amount threshold is determined by the first network device or predefined.

Optionally, the first response message indicates the partial context of the terminal device. For detailed descriptions of the first response message, refer to the foregoing related descriptions. Details are not described again.

S103: The second network device sends the RRC release message to the terminal device, and correspondingly, the terminal device receives the RRC release message from the second network device.

In an optional implementation, the RRC release message further includes information indicating the terminal device to immediately initiate an RRC resume procedure, and the RRC resume procedure is used by the terminal device to request to enter an RRC connected state and transmit data in the RRC connected state. It may be understood that the RRC resume procedure is a non-SDT RRC resume procedure. It can be learned that in a case in which the amount of to-be-transmitted data in the SDT of the terminal device is greater than or equal to the data amount threshold, the first network device indicates the terminal device to immediately initiate the RRC resume procedure, so that the terminal device transmits the large amount of data in the RRC connected state, to improve transmission efficiency.

S104: The terminal device terminates the SDT procedure and keeps in the RRC inactive state.

In an optional implementation, after the terminal device receives the RRC release message from the first network device, the method further includes: The terminal device immediately initiates the RRC resume procedure.

Specifically, that the terminal device initiates the RRC resume procedure includes: The terminal device sends an RRC resume request (namely, RRC resume request) message (without sending uplink data) to the second network device, where the RRC resume request message is used to request to resume an RRC connection; and correspondingly, the second network device receives the RRC resume request message from the terminal device. The second network device sends an RRC resume message to the terminal device, where the RRC resume message indicates the terminal device to resume the RRC connection. Correspondingly, the terminal device receives the RRC resume message from the second network device. The terminal device resumes the RRC connection to enter the RRC connected state, and the terminal device sends the large amount of data to the second network device in the RRC connected state.

In conclusion, in the message transmission method, in a case in which the size of the to-be-transmitted data in the SDT of the terminal device is greater than or equal to the data amount threshold, the first network device sends the RRC release message to the second network device, where the RRC release message indicates the terminal device to terminate the SDT procedure and keep in the RRC inactive state. It can be learned that when a large amount of data arrives at the terminal device in the SDT procedure, the large amount of data is still transmitted through the SDT procedure, causing low transmission efficiency of the large amount of data. However, in the message transmission method provided in this embodiment of this application, the terminal device can be indicated in a timely manner to terminate the SDT procedure, to avoid the low transmission efficiency of the large amount of data. In addition, the terminal device that terminates the SDT procedure and keeps in the RRC inactive state initiates the RRC resume procedure, so that the terminal device transmits the large amount of data in the RRC connected state, to improve the transmission efficiency.

In embodiments of this application, the message transmission method in which the foregoing Implementation 1.1 is used and the message transmission method in which the foregoing Implementation 1.2 is used are further described by using examples.

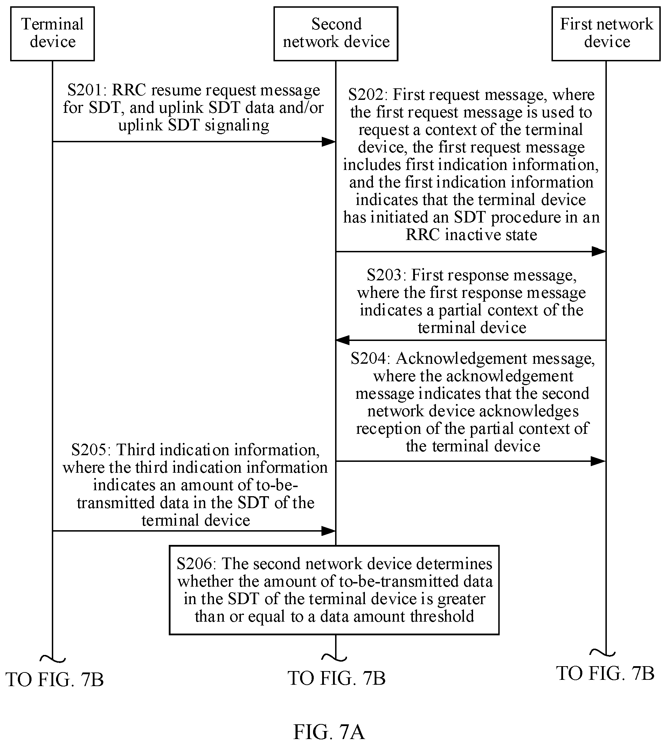

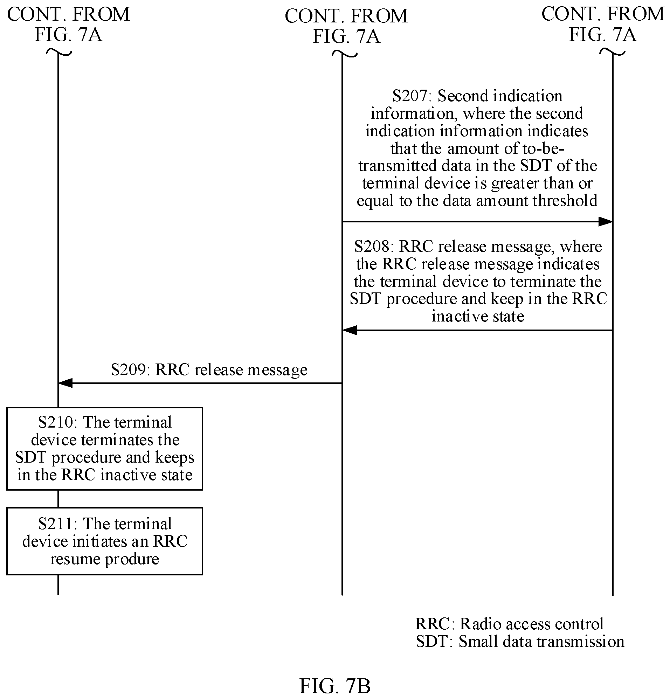

Example 1: A case described in Implementation 1.1 in which the first network device determines, based on the second indication information, that the amount of to-be-transmitted data in the SDT of the terminal device is greater than or equal to the data amount threshold is used. The second indication information is sent by the second network device to the first network device, and the second indication information indicates that the amount of to-be-transmitted data in the SDT of the terminal device is greater than or equal to the data amount threshold. An example message transmission method is shown in FIG. 7A and FIG. 7B, and includes the following steps.

S201: The terminal device sends, to the second network device, an RRC resume request message for SDT, and uplink SDT data and/or uplink SDT signaling. Correspondingly, the second network device receives the RRC resume request message for the SDT, and the uplink SDT data and/or the uplink SDT signaling from the terminal device. The RRC resume request message for the SDT includes an I-RNTI, and the I-RNTI is used to identify a context of the terminal device.

S202: The second network device sends a first request message to the first network device; and correspondingly, the first network device receives the first request message from the second network device. The first request message is used to request the context of the terminal device, the first request message includes first indication information, and the first indication information indicates that the terminal device has initiated an SDT procedure in an RRC inactive state.

In addition, before the second network device sends the first request message to the first network device, the method further includes: The second network device determines the first network device based on the I-RNTI.

S203: The first network device sends a first response message to the second network device; and correspondingly, the second network device receives the first response message from the first network device. The first response message indicates a partial context of the terminal device.

S204: The second network device sends an acknowledgement message to the first network device; and correspondingly, the first network device receives the acknowledgement message from the second network device. The acknowledgement message indicates that the second network device acknowledges reception of the partial context of the terminal device.

S205: The terminal device sends third indication information to the second network device; and correspondingly, the second network device receives the third indication information from the terminal device. The third indication information indicates the amount of to-be-transmitted data in the SDT of the terminal device.

S206: The second network device determines whether the amount of to-be-transmitted data in the SDT of the terminal device is greater than or equal to the data amount threshold. If the amount of to-be-transmitted data in the SDT of the terminal device is greater than or equal to the data amount threshold, steps S207 to S211 are performed.

In an optional implementation, the data amount threshold is determined by the second network device. Alternatively, the data amount threshold is sent by the first network device to the second network device. For example, the data amount threshold is carried in the first response message in step S203.

S207: The second network device sends second indication information to the first network device; and correspondingly, the first network device receives the second indication information from the second network device. The second indication information indicates that the amount of to-be-transmitted data in the SDT of the terminal device is greater than or equal to the data amount threshold.

S208: The first network device sends an RRC release message to the second network device; and correspondingly, the second network device receives the RRC release message from the first network device. The RRC release message indicates the terminal device to terminate the SDT procedure and keep in the RRC inactive state.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

S209: The second network device sends the RRC release message to the terminal device. Correspondingly, the terminal device receives the RRC release message from the second network device.

S210: The terminal device terminates the SDT procedure and keeps in the RRC inactive state.

S211: The terminal device initiates the RRC resume procedure.

For detailed descriptions of steps S201 to S211, refer to related descriptions in the message transmission method shown in FIG. 6. Steps S201 to S211 also have corresponding beneficial effects, and details are not described again.

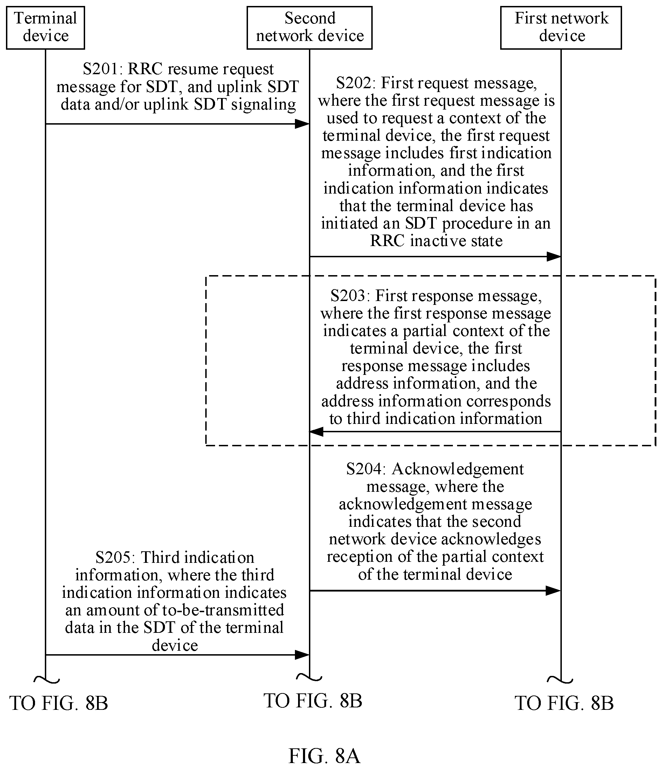

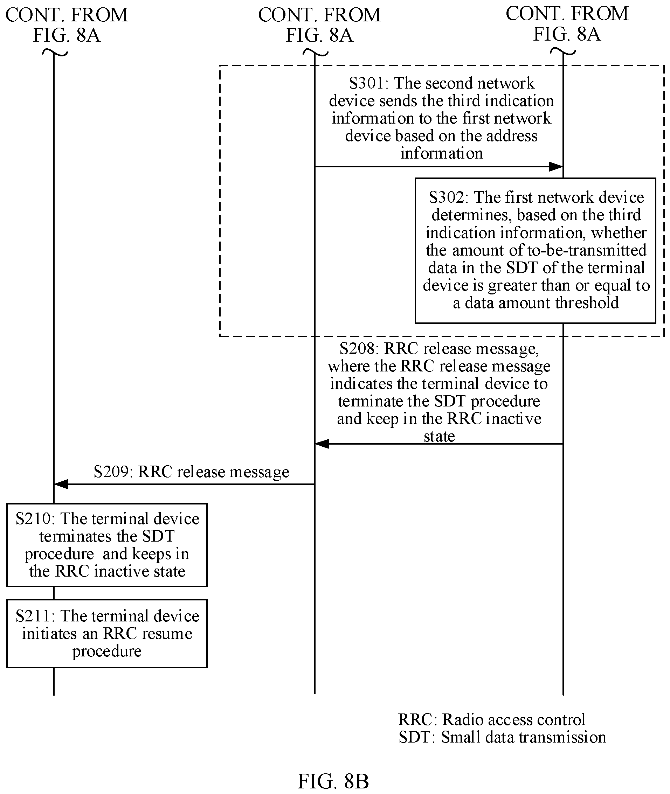

Example 2: A case described in Implementation 1.2 in which the first network device determines, based on the third indication information, whether the amount of to-be-transmitted data in the SDT of the terminal device is greater than or equal to the data amount threshold is used. The third indication information is sent by the second network device to the first network device, and the third indication information indicates the amount of to-be-transmitted data in the SDT of the terminal device. An example message transmission method is shown in FIG. 8A and FIG. 8B.

As shown in a dashed box in FIG. 8A and FIG. 8B, a difference between the message transmission method shown in FIG. 8A and FIG. 8B and the message transmission method shown in FIG. 7A and FIG. 7B lies in the following cases.
1. In the message transmission method shown in FIG. 8A and FIG. 8B, the first response message transmitted in step S203 includes address information, the address information corresponds to third indication information, and the third indication information indicates the amount of to-be-transmitted data in the SDT of the terminal device.
2. The message transmission method shown in FIG. 8A and FIG. 8B does not include steps S206 and S207 in FIG. 7A and FIG. 7B.
3. In the message transmission method shown in FIG. 8A and FIG. 8B, after step S205, the method further includes steps S301 and S302.

S301: The second network device sends the third indication information to the first network device based on the address information. Correspondingly, the first network device receives the third indication information from the second network device based on the address information.

S302: The first network device determines, based on the third indication information, whether the amount of to-be-transmitted data in the SDT of the terminal device is greater than or equal to the data amount threshold. If the amount of to-be-transmitted data in the SDT of the terminal device is greater than or equal to the data amount threshold, steps S208 to S211 are performed.

In addition, for detailed descriptions of the steps in FIG. 8A and FIG. 8B, refer to related descriptions in the message transmission method shown in FIG. 6. The steps also have corresponding beneficial effects, and details are not described again.

To implement functions in the foregoing methods provided in embodiments of this application, the first network device or the second network device may include a hardware structure and/or a software module, and implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

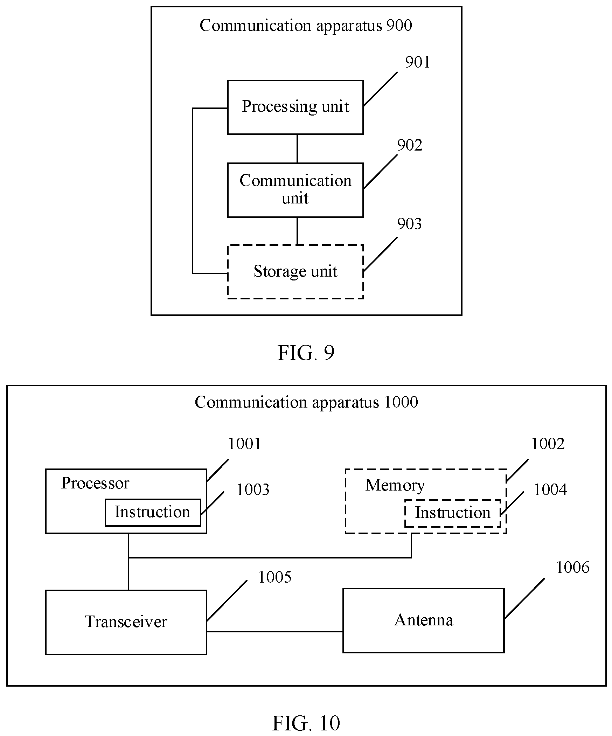

As shown in FIG. 9, an embodiment of this application provides a communication apparatus 900. The communication apparatus 900 may be a first network device or a second network device, or may be a component (for example, an integrated circuit or a chip) of the first network device, or may be a component (for example, an integrated circuit or a chip) of the second network device. Alternatively, the communication apparatus 900 may be another communication unit, configured to implement the methods in method embodiments of this application. The communication apparatus 900 may include a processing unit 901. Optionally, the communication apparatus 900 may further include a communication unit 902. The processing unit 901 is configured to control the communication unit 902 to perform data/signaling receiving and sending. The communication unit 902 may also be referred to as a transceiver unit. Optionally, the communication unit 902 may include a sending unit and a receiving unit. The sending unit may be configured to send data/signaling, and the receiving unit may be configured to receive data/signaling. Optionally, the communication apparatus 900 may further include a storage unit 903. The storage unit 903 may be configured to store information and/or data and/or instructions, and/or the like. The storage unit 903 may interact with the processing unit 901, or may interact with the communication unit 902.

In a possible design, for a case in which the communication apparatus 900 is configured to implement a function of the first network device in the foregoing method embodiments,
the communication unit 902 is configured to receive a first request message from the second network device, where the first request message is used to request a context of a terminal device, the first request message includes first indication information, the first indication information indicates that the terminal device has initiated an SDT procedure in an RRC inactive state, and the communication apparatus 900 has stored the context of the terminal device; and
the communication unit 902 is further configured to: if an amount of to-be-transmitted data in SDT of the terminal device is greater than or equal to a data amount threshold, send an RRC release message to the second network device, where the RRC release message indicates the terminal device to terminate the SDT procedure and keep in the RRC inactive state.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the communication unit 902 is further configured to receive second indication information from the second network device, where the second indication information indicates that the amount of to-be-transmitted data in the SDT of the terminal device is greater than or equal to the data amount threshold.

Optionally, the second indication information is carried in a control plane message or a user plane message from the second network device.

In an optional implementation, the communication unit 902 is further configured to send the data amount threshold to the second network device.

Optionally, the data amount threshold is carried in a first response message sent to the second network device, and the first response message indicates a partial context of the terminal device.

In an optional implementation, the communication unit 902 is further configured to send a first response message to the second network device, where the first response message includes address information, the address information corresponds to third indication information, and the third indication information indicates the amount of to-be-transmitted data in the SDT of the terminal device. The communication unit 902 is further configured to receive the third indication information from the second network device based on the address information. The processing unit 901 is configured to determine, based on the third indication information, that the amount of to-be-transmitted data in the SDT of the terminal device is greater than or equal to the data amount threshold.

Optionally, the first response message indicates a partial context of the terminal device.

In another possible design, for a case in which the communication apparatus 900 is configured to implement a function of the second network device in the foregoing method embodiments,
the communication unit 902 is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device;
the communication unit 902 is further configured to send second indication information to the first network device, where the second indication information indicates that an amount of to-be-transmitted data in SDT of the terminal device is greater than or equal to a data amount threshold;
the communication unit 902 is further configured to receive an RRC release message from the first network device, where the RRC release message indicates the terminal device to terminate the SDT procedure and keep in the RRC inactive state; and
the communication unit 902 is further configured to send the RRC release message to the terminal device.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the processing unit 901 is configured to determine the data amount threshold; or the communication unit 902 is further configured to receive the data amount threshold from the first network device. The communication unit 902 is further configured to: if the amount of to-be-transmitted data in the SDT of the terminal device is greater than or equal to the data amount threshold, send the second indication information to the first network device.

In an optional implementation, the communication unit 902 is further configured to receive third indication information from the terminal device, where the third indication information indicates the amount of to-be-transmitted data in the SDT of the terminal device.

In an optional implementation, the data amount threshold received by the communication unit 902 is carried in a first response message from the first network device, and the first response message indicates a partial context of the terminal device.

In an optional implementation, the second indication information is carried in a control plane message or a user plane message that is sent to the first network device.

In another possible design, for a case in which the communication apparatus 900 is configured to implement a function of the second network device in the foregoing method embodiments,
the communication unit 902 is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device;
the communication unit 902 is further configured to receive a first response message from the first network device, where the first response message includes address information, the address information corresponds to third indication information, and the third indication information indicates the amount of to-be-transmitted data in SDT of the terminal device;
the communication unit 902 is further configured to send the third indication information to the first network device based on the address information;
the communication unit is further configured to receive an RRC release message from the first network device, where the RRC release message indicates the terminal device to terminate the SDT procedure and keep in the RRC inactive state; and
the communication unit 902 is further configured to send the RRC release message to the terminal device.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the first response message indicates a partial context of the terminal device.

This embodiment of this application and the foregoing method embodiment are based on the same concept, and bring a same technical effect. For a specific principle, refer to the descriptions of the foregoing embodiment. Details are not described again.

An embodiment of this application further provides a communication apparatus 1000, as shown in FIG. 10. The communication apparatus 1000 may be a first network device or a second network device, or may be a chip, a chip system, a processor, or the like that supports the first network device in implementing the foregoing method, or may be a chip, a chip system, a processor, or the like that supports the second network device in implementing the foregoing method. The apparatus may be configured to implement the method described in the foregoing method embodiments. For details, refer to the descriptions in the foregoing method embodiments.

The communication apparatus 1000 may include one or more processors 1001. The processor 1001 may be configured to implement some or all functions of the first network device or the second network device by using a logic circuit or by running a computer program. The processor 1001 may be a general-purpose processor, a dedicated processor, or the like. For example, the processor 1001 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control the communication apparatus, execute a software program, and process data of the software program. The communication apparatus is, for example, a base station, a baseband chip, a terminal, a terminal chip, a central unit (central unit, CU), or a distributed unit (distributed unit, DU).

Optionally, the communication apparatus 1000 may include one or more memories 1002. The memory may store instructions 1004. The instructions may be run on the processor 1001, so that the communication apparatus 1000 performs the method described in the foregoing method embodiments. Optionally, the memory 1002 may further store data. The processor 1001 and the memory 1002 may be separately disposed, or may be integrated together.

The memory 1002 may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In a possible design, for a case in which the communication apparatus 1000 is configured to implement a function of the first network device in the foregoing method embodiments,
the transceiver 1005 is configured to receive a first request message from the second network device, where the first request message is used to request a context of a terminal device, the first request message includes first indication information, the first indication information indicates that the terminal device has initiated an SDT procedure in an RRC inactive state, and the communication apparatus 1000 has stored the context of the terminal device; and
the transceiver 1005 is further configured to: if an amount of to-be-transmitted data in SDT of the terminal device is greater than or equal to a data amount threshold, send an RRC release message to the second network device, where the RRC release message indicates the terminal device to terminate the SDT procedure and keep in the RRC inactive state.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the transceiver 1005 is further configured to receive second indication information from the second network device, where the second indication information indicates that the amount of to-be-transmitted data in the SDT of the terminal device is greater than or equal to the data amount threshold.

Optionally, the second indication information is carried in a control plane message or a user plane message from the second network device.

In an optional implementation, the transceiver 1005 is further configured to send the data amount threshold to the second network device.

Optionally, the data amount threshold is carried in a first response message sent to the second network device, and the first response message indicates a partial context of the terminal device.

In an optional implementation, the transceiver 1005 is further configured to send a first response message to the second network device, where the first response message includes address information, the address information corresponds to third indication information, and the third indication information indicates the amount of to-be-transmitted data in the SDT of the terminal device. The transceiver 1005 is further configured to receive the third indication information from the second network device based on the address information. The processor 1001 is configured to determine, based on the third indication information, that the amount of to-be-transmitted data in the SDT of the terminal device is greater than or equal to the data amount threshold.

Optionally, the first response message indicates a partial context of the terminal device.

In another possible design, for a case in which the communication apparatus 1000 is configured to implement a function of the second network device in the foregoing method embodiments,
the transceiver 1005 is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device;
the transceiver 1005 is further configured to send second indication information to the first network device, where the second indication information indicates that an amount of to-be-transmitted data in SDT of the terminal device is greater than or equal to a data amount threshold;
the transceiver 1005 is further configured to receive an RRC release message from the first network device, where the RRC release message indicates the terminal device to terminate the SDT procedure and keep in the RRC inactive state; and
the transceiver 1005 is further configured to send the RRC release message to the terminal device.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the processor 1001 is configured to determine the data amount threshold; or the transceiver 1005 is further configured to receive the data amount threshold from the first network device. The transceiver 1005 is further configured to: if the amount of to-be-transmitted data in the SDT of the terminal device is greater than or equal to the data amount threshold, send the second indication information to the first network device.

In an optional implementation, the transceiver 1005 is further configured to receive third indication information from the terminal device, where the third indication information indicates the amount of to-be-transmitted data in the SDT of the terminal device.

In an optional implementation, the data amount threshold received by the transceiver 1005 is carried in a first response message from the first network device, and the first response message indicates a partial context of the terminal device.

In an optional implementation, the second indication information is carried in a control plane message or a user plane message that is sent to the first network device.

In another possible design, for a case in which the communication apparatus 1000 is configured to implement a function of the second network device in the foregoing method embodiments,
the transceiver 1005 is configured to send a first request message to the first network device, where the first request message is used to request a context of a terminal device, the first request message includes first indication information, the first indication information indicates that the terminal device has initiated an SDT procedure in an RRC inactive state, and the first network device has stored the context of the terminal device;
the transceiver 1005 is further configured to receive a first response message from the first network device, where the first response message includes address information, the address information corresponds to third indication information, and the third indication information indicates the amount of to-be-transmitted data in SDT of the terminal device;
the transceiver 1005 is further configured to send the third indication information to the first network device based on the address information;
the communication unit is further configured to receive an RRC release message from the first network device, where the RRC release message indicates the terminal device to terminate the SDT procedure and keep in the RRC inactive state; and
the transceiver 1005 is further configured to send the RRC release message to the terminal device.

In an optional implementation, the RRC release message further includes information indicating the terminal device to immediately initiate an RRC resume procedure, and the RRC resume procedure is used by the terminal device to request to enter an RRC connected state and transmit data in the RRC connected state.

In an optional implementation, the first response message indicates a partial context of the terminal device.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1001 may store instructions 1003, and the instructions 1003 are run on the processor 1001, to cause the communication apparatus 1000 to perform the method described in the foregoing method embodiments. The instructions 1003 may be built into the processor 1001. In this case, the processor 1001 may be implemented by hardware.

In still another possible design, the communication apparatus 1000 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic block) and steps (step) that are listed in embodiments of this application may be implemented by using electronic hardware, computer software, or a combination thereof. Whether the functions are implemented by using the hardware or the software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing method embodiment are based on the same concept, and bring a same technical effect. For a specific principle, refer to the descriptions of the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement embodiments, all or some of embodiments may be implemented in the form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A message transmission method, applied to a first network device, wherein the method comprises:
receiving a first request message from a second network device, wherein the first request message is used to request a context of a terminal device, the first request message comprises first indication information, the first indication information indicates that the terminal device has initiated a small data transmission SDT procedure in a radio access control RRC inactive state, and the first network device has stored the context of the terminal device; and
if an amount of to-be-transmitted data in SDT of the terminal device is greater than or equal to a data amount threshold, sending an RRC release message to the second network device, wherein the RRC release message indicates the terminal device to terminate the SDT procedure and keep in the RRC inactive state.

2. The method according to claim 1, wherein
the RRC release message further comprises information indicating the terminal device to immediately initiate an RRC resume procedure, and the RRC resume procedure is used by the terminal device to request to enter an RRC connected state and transmit data in the RRC connected state.

3. The method according to claim 1 or 2, wherein the method further comprises:
receiving second indication information from the second network device, wherein the second indication information indicates that the amount of to-be-transmitted data in the SDT of the terminal device is greater than or equal to the data amount threshold.

4. The method according to claim 3, wherein
the second indication information is carried in a control plane message or a user plane message from the second network device.

5. The method according to claim 3 or 4, wherein before the receiving the second indication information from the second network device, the method further comprises:
sending the data amount threshold to the second network device.

6. The method according to claim 5, wherein
the data amount threshold is carried in a first response message sent to the second network device, and the first response message indicates a partial context of the terminal device.

7. The method according to claim 1 or 2, wherein the method further comprises:
sending a first response message to the second network device, wherein the first response message comprises address information, the address information corresponds to third indication information, and the third indication information indicates the amount of to-be-transmitted data in the SDT of the terminal device;
receiving the third indication information from the second network device based on the address information; and
determining, based on the third indication information, that the amount of to-be-transmitted data in the SDT of the terminal device is greater than or equal to the data amount threshold.

8. The method according to claim 7, wherein the first response message indicates a partial context of the terminal device.

9. A message transmission method, applied to a second network device, wherein the method comprises:
sending a first request message to a first network device, wherein the first request message is used to request a context of a terminal device, the first request message comprises first indication information, the first indication information indicates that the terminal device has initiated a small data transmission SDT procedure in a radio access control RRC inactive state, and the first network device has stored the context of the terminal device;
sending second indication information to the first network device, wherein the second indication information indicates that an amount of to-be-transmitted data in SDT of the terminal device is greater than or equal to a data amount threshold;
receiving an RRC release message from the first network device, wherein the RRC release message indicates the terminal device to terminate the SDT procedure and keep in the RRC inactive state; and
sending the RRC release message to the terminal device.

10. The method according to claim 9, wherein
the RRC release message further comprises information indicating the terminal device to immediately initiate an RRC resume procedure, and the RRC resume procedure is used by the terminal device to request to enter an RRC connected state and transmit data in the RRC connected state.

11. The method according to claim 9 or 10, wherein the sending the second indication information to the first network device comprises:
determining the data amount threshold; or receiving the data amount threshold from the first network device; and
if the amount of to-be-transmitted data in the SDT of the terminal device is greater than or equal to the data amount threshold, sending the second indication information to the first network device.

12. The method according to claim 11, wherein the method further comprises:
receiving third indication information from the terminal device, wherein the third indication information indicates the amount of to-be-transmitted data in the SDT of the terminal device.

13. The method according to claim 11 or 12, wherein
the received data amount threshold is carried in a first response message from the first network device, and the first response message indicates a partial context of the terminal device.

14. The method according to any one of claims 9 to 13, wherein
the second indication information is carried in a control plane message or a user plane message that is sent to the first network device.

15. A message transmission method, applied to a second network device, wherein the method comprises:
sending a first request message to a first network device, wherein the first request message is used to request a context of a terminal device, the first request message comprises first indication information, the first indication information indicates that the terminal device has initiated a small data transmission SDT procedure in a radio resource control RRC inactive state, and the first network device has stored the context of the terminal device;
receiving a first response message from the first network device, wherein the first response message comprises address information, the address information corresponds to third indication information, and the third indication information indicates an amount of to-be-transmitted data in SDT of the terminal device;
sending the third indication information to the first network device based on the address information;
receiving an RRC release message from the first network device, wherein the RRC release message indicates the terminal device to terminate the SDT procedure and keep in the RRC inactive state; and
sending the RRC release message to the terminal device.

16. The method according to claim 15, wherein
the RRC release message further comprises information indicating the terminal device to immediately initiate an RRC resume procedure, and the RRC resume procedure is used by the terminal device to request to enter an RRC connected state and transmit data in the RRC connected state.

17. The method according to claim 15 or 16, wherein the first response message indicates a partial context of the terminal device.

18. A communication apparatus, wherein the apparatus comprises a module or a unit configured to implement the method according to any one of claims 1 to 8, or the apparatus comprises a module or a unit configured to implement the method according to any one of claims 9 to 14, or the apparatus comprises a module or a unit configured to implement the method according to any one of claims 15 to 17.

19. A communication apparatus, comprising a processor, wherein
the processor is configured to execute a computer program or instructions in a memory, to cause the communication apparatus to perform the method according to any one of claims 1 to 8, or cause the communication apparatus to perform the method according to any one of claims 9 to 14, or cause the communication apparatus to perform the method according to any one of claims 15 to 17.

20. A communication system, comprising at least one of the following apparatuses: an apparatus configured to perform the method according to any one of claims 1 to 8, an apparatus configured to perform the method according to any one of claims 9 to 14, and an apparatus configured to perform the method according to any one of claims 15 to 17.

21. A computer-readable storage medium, wherein the computer-readable storage medium stores a computer program, and when the computer program is run, the method according to any one of claims 1 to 8 is implemented, or the method according to any one of claims 9 to 14 is implemented, or the method according to any one of claims 15 to 17 is implemented.

22. A computer program product, wherein the computer program product comprises computer program code, and when the computer program code is run, the method according to any one of claims 1 to 8 is implemented, or the method according to any one of claims 9 to 14 is implemented, or the method according to any one of claims 15 to 17 is implemented.
